# FASCICULE DE BREVET EUROPEEN

(11) **EP 1 776 856 B1**
(45) Date de publication et mention de la délivrance du brevet: **24.03.2010**
(21) Numéro de dépôt: 06301072.2
(22) Date de dépôt: 20.10.2006
(51) Int. Cl.: A01D 34/84

(54) **Dispositif de decoupe de vegetaux**
Vegetations-Mähvorrichtung
Vegetation cutter

(30) Priorité: 20.10.2005 FR 0510721
(43) Date de publication de la demande: 25.04.2007
(73) Titulaire: Ingenierie Design & Creation, 85140 Les Essarts (FR)
(72) Inventeur: Rabaud, Claude, 85110, Sainte-Cécile (FR); Duret, Léon, 85480, Fougeré (FR); Boursier, Christian, 49300, Cholet (FR)
(74) Mandataire: Michelet, Alain

(56) Documents cités:
- EP-A- 0 147 344
- EP-A- 1 151 651
- FR-A- 2 382 183
- FR-A- 2 771 894

## Description

La présente invention concerne un dispositif de découpe de végétaux, et plus particulièrement un dispositif de type débroussailleuse, destiné à équiper un bras de manipulation spatiale, notamment pour la taille de haies ou l'entretien d'accotements.

Les dispositifs de ce genre connus à ce jour fonctionnent au moyen d'organes de découpe rotatifs dont les vitesses de rotation sont élevées, notamment bien souvent supérieures à 500 tours/minute. Leur mise en oeuvre entraîne par conséquent des risques de projections, soit de morceaux de végétaux découpés, soit de parties structurelles de l'outillage, en cas de bris ou de casse.
D'autre part, en règle générale, les végétaux découpés tombent au sol, et dans certains cas une ou plusieurs opérations ultérieures de reprise s'avèrent nécessaires, les travaux correspondants étant bien souvent pénibles et coûteux en main d'oeuvre.

Les documents FR-2 771 894 ou EP-1 151 651 présentent des dispositifs de coupe et de broyage des végétaux spécifiquement adaptés pour l'entretien des bas-côtés de routes. Ces dispositifs, constitués d'un caisson ouvert en partie inférieure, dans lequel sont juxtaposés des disques de découpe et un rotor transversal de broyage posent des problèmes identiques à ceux énumérés ci-dessus.

La présente invention a pour but de remédier à ces inconvénients.

A cet effet, le dispositif de découpe de végétaux conforme à l'invention comprend un châssis supportant au moins un organe de découpe desdits végétaux, et un dispositif hacheur comportant un rotor de hachage, ledit rotor de hachage est intégré dans un carter qui est muni d'une entrée et d'une sortie, et ledit ou lesdits organes de découpe sont disposés à l'extérieur dudit carter de rotor, ledit ou lesdits organes de découpe étant constitué(s) d'un disque de découpe supérieur, muni de dents périphériques, associé à un disque inférieur également muni de dents périphériques, faisant office de contre-couteaux, lequel dispositif hacheur est juxtaposé au(x)dit(s) organe(s) de découpe, agencé pour assurer la reprise par ladite entrée de carter (36) desdits végétaux découpés, le broyage de ces végétaux par ledit rotor, puis l'éjection desdits végétaux broyés par ladite sortie de carter, ledit rotor faisant alors office de ventilateur d'éjection.

La structure de tels organes de découpe permet leur mise en oeuvre à des vitesses relativement faibles. D'autre part, après la découpe, les végétaux broyés peuvent être automatiquement récupérés, par exemple dans une remorque ou dans une trémie de stockage. On évite ainsi la ou les opérations ultérieures de reprise ; en outre, étant donné leur broyage, les végétaux récupérés occupent alors un volume limité, et ils peuvent aussi être utilisés pour la formation de compost.

Selon une forme de réalisation préférée, le dispositif comporte deux organes de découpe juxtaposés, situés dans le même plan de coupe, et dont les disques de découpe supérieurs tournent en sens inverse l'un de l'autre, l'espace situé au-dessus dudit plan de coupe et entre les axes desdits organes de découpe constituant un canal de transit des végétaux découpés, et l'entrée du dispositif hacheur étant disposée dans le prolongement immédiat de ce canal.

Selon une autre particularité, le disque inférieur du ou des organes de découpe est entraîné en sens inverse par rapport au disque supérieur associé. De préférence, ce disque inférieur est entraîné en rotation à une vitesse inférieure à celle du disque supérieur ; par exemple, le disque supérieur peut être entraîné à une vitesse comprise entre 100 et 150 tours/minute, le disque inférieur étant lui-même entraîné à une vitesse comprise entre 10 et 50 tours/minute.

Dans une forme de réalisation particulière, le disque inférieur est entraîné par la motorisation du disque supérieur de découpe, au moyen d'un système adapté d'engrenage par pignons.

Selon encore une autre particularité, le disque supérieur de chaque organe de découpe se prolonge par une virole coaxiale adaptée pour canaliser les végétaux découpés. De préférence, la virole correspondante comporte des organes d'entraînement des végétaux découpés, en forme de dents périphériques.

Dans une forme de réalisation particulièrement intéressante, le dispositif comporte deux organes de découpe juxtaposés, situés dans le même plan, dont les disques supérieurs se prolongent chacun par une virole de canalisation au sein de laquelle est intégré un moteur hydraulique servant à l'entraînement en rotation de l'organe de découpe associé. Ces deux viroles définissent les côtés du canal de transit des végétaux, ce canal étant également délimité par une structure supérieure fixe s'étendant juste au-dessus desdites viroles, et par une structure inférieure fixe s'étendant juste au-dessous des organes de découpe. Ces deux structures supérieure et inférieure font partie intégrante du châssis du dispositif, et la structure inférieure se prolonge jusqu'à la partie inférieure de l'entrée du dispositif hacheur.

Selon encore une autre particularité, le dispositif hacheur est constitué d'un carter de forme générale cylindrique muni - d'une entrée délimitée par une bordure supérieure et par une bordure inférieure, et - d'un orifice de sortie. Ce carter intègre un rotor de hachage qui est entraîné par une motorisation hydraulique, et dont les couteaux coopèrent avec un organe équipant ladite bordure inférieure du carter, faisant office de contre-couteau, lequel rotor assure l'aspiration des végétaux découpés, leur broyage et l'éjection des végétaux broyés par l'orifice de sortie. Cette éjection des végétaux broyés s'effectue avantageusement vers une trémie ou remorque de récupération, ceci par l'intermédiaire d'une canalisation souple, et sous l'effet « ventilateur » procuré par le rotor de hachage.

Mais l'invention sera encore illustrée, sans être aucunement limitée, par la description suivante d'une forme de réalisation particulière, donnée uniquement à titre d'exemple et représentée sur les dessins annexés dans lesquels :
- la figure 1 montre le dispositif de découpe, vu en perspective et de manière schématique, constitué principalement de deux organes de découpe et d'un dispositif hacheur porté par un châssis support ;
- la figure 2 est une vue de dessus du dispositif de découpe de la figure 1, montrant certains éléments structurels en transparence ;
- la figure 3 montre le dispositif de découpe des figures 1 et 2, vu de côté ;
- la figure 4 est une vue en perspective d'une partie de l'un des organes de découpe du dispositif illustré sur les figures 1 à 3, détaillant les moyens d'entraînement du disque inférieur ;
- la figure 5 est une vue en perspective du dispositif hacheur équipant le dispositif de découpe des figures 1 à 3, montrant aussi certains éléments structurels en transparence.

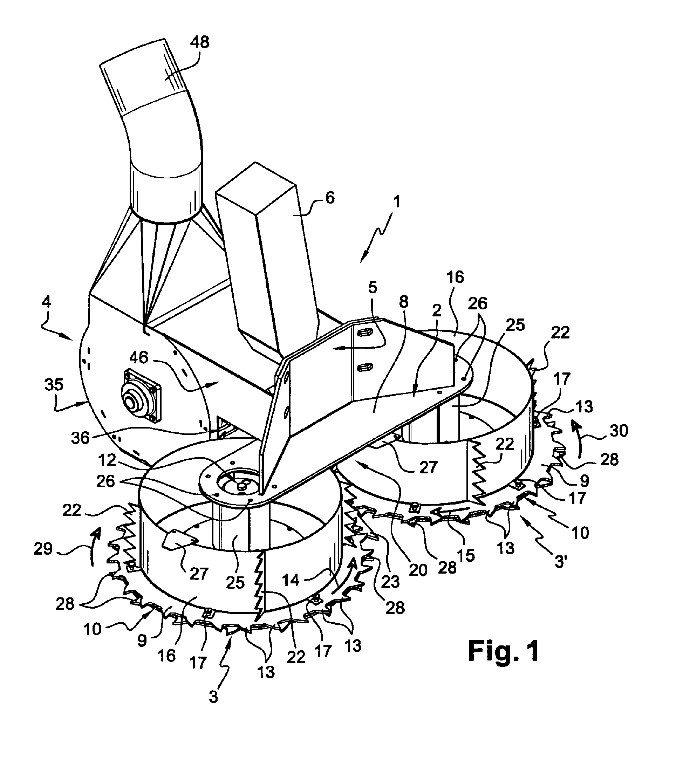

Tel qu'illustré schématiquement sur les figures 1 à 3, le dispositif de découpe de végétaux 1 est constitué d'un châssis 2 supportant deux organes de découpe 3, 3' associés à un dispositif hacheur 4. Le châssis 2 est muni de moyens 5 qui permettent son accrochage à l'extrémité d'un bras de manipulation 6 équipant un engin porteur, de type tracteur agricole ou véhicule spécialement dédié.
Le bras de manipulation 6 correspondant, de structure classique, sera adapté pour commander un positionnement à volonté dans l'espace des organes de découpe 3, 3', de manière à permettre une découpe des végétaux dans tous les plans.

Les deux organes de découpe 3, 3' sont adaptés pour assurer la découpe des végétaux, et pour orienter les végétaux découpés vers le dispositif hacheur 4 qui va assurer leur aspiration, leur broyage puis leur éjection en direction d'une trémie de réception ou d'une remorque équipant le véhicule porteur.

Le châssis 2 est principalement constitué de deux plateaux parallèles, l'un inférieur 7 et l'autre supérieur 8, entre lesquels sont disposés les deux organes de découpe 3, 3'.
Le plateau inférieur 7 supporte également le dispositif hacheur 4, et le plateau supérieur 8 est équipé des moyens 5 qui permettent l"accrochage au bras manipulateur 6.

Les deux organes de découpe 3, 3' sont chacun constitués d'un couple de disques superposés, l'un supérieur 9 et l'autre inférieur 10. Ces deux couples de disques 3, 3' sont juxtaposés et situés dans le même plan de coupe, juste au-dessus du plateau inférieur 7 ; cette juxtaposition est réalisée de sorte à limiter au maximum l'espace situé au niveau de leur zone de tangence.

Les deux organes de coupe 3, 3' sont associés chacun à une motorisation hydraulique 12 pour assurer leur entraînement en rotation.

Les disques supérieurs 9 des organes de coupe 3, 3' sont munis de dents périphériques 13, et ils sont entraînés par la motorisation associée 12, ceci en sens inverse l'un de l'autre, tel qu'illustré par les flèches d'orientation 14 et 15.

Ces deux disques supérieurs 9 constituent les moyens de coupe proprement dits du dispositif de découpe 1. Leur face supérieure est équipée d'une virole coaxiale 16 qui est fixée au moyen de pattes de solidarisation 17, et qui s'étend pratiquement jusqu'au plateau supérieur 8.

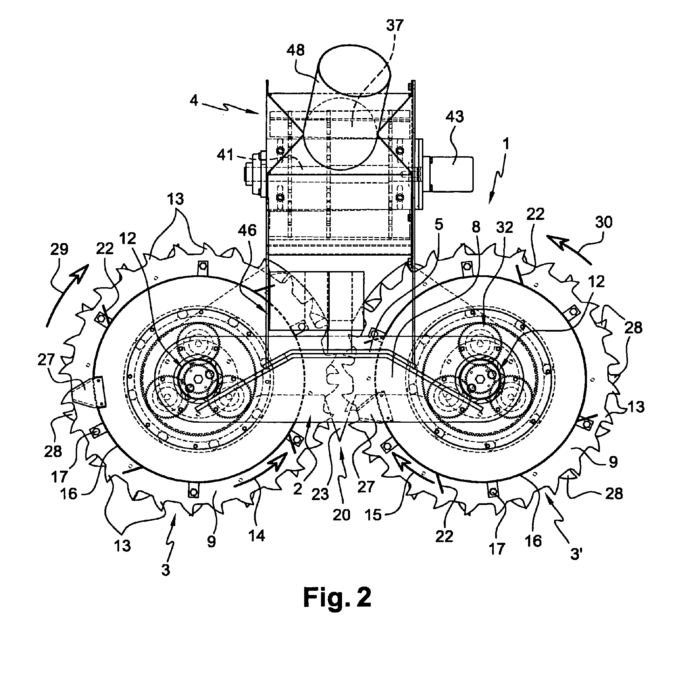

Les deux disques supérieurs 9 sont agencés de manière à découper les végétaux puis à les orienter dans le canal de transit central 20 situé entre leurs axes de rotation, délimité, sur les côtés, par les deux viroles latérales 16, en haut par le plateau supérieur 8, et en bas par le plateau inférieur 7.
Une fois les végétaux découpés et orientés dans le canal central 20, ils sont repris par le dispositif hacheur 4 dont l'ouverture est située à proximité immédiate, juste derrière les deux organes de découpe 3, 3'. L'enfournement des végétaux dans le canal 20 en direction du dispositif hacheur 4 est optimisé par la présence d'organes d'entraînement 22 aménagés de manière régulière sur la périphérie des deux viroles tournantes 16. Ces organes d'entraînement 22 se présentent sous la forme de plats verticaux soudés, dont les extrémités sont découpées en dents de scie. Comme on peut le voir sur les figures 1 et 2, les plats ou dents 22 sont de préférence inclinés par rapport au plan radial passant par leur ligne de fixation, pour optimiser la prise en charge des végétaux.

Entre les deux organes de découpe 3, 3', la partie centrale avant du plateau inférieur 7 est équipée d'un organe déflecteur 23, visible sur les figures 1 et 2, apte à orienter les végétaux en direction de l'un ou de l'autre desdits organes de découpe 3, 3', afin d'assurer une découpe optimale.

Les motorisations 12 des disques supérieurs 9 sont disposées entre les deux plateaux 7 et 8 du châssis 2, logés chacun dans la virole 16 associée.
Du côté du plateau inférieur 7, le corps de chaque motorisation 12 se prolonge par un manchon 25 qui remonte vers le plateau supérieur 8 et sur lequel il vient se fixer au moyen de vis 26.

L'arbre de sortie de chaque motorisation 12 entraîne directement le disque supérieur 9 associé.

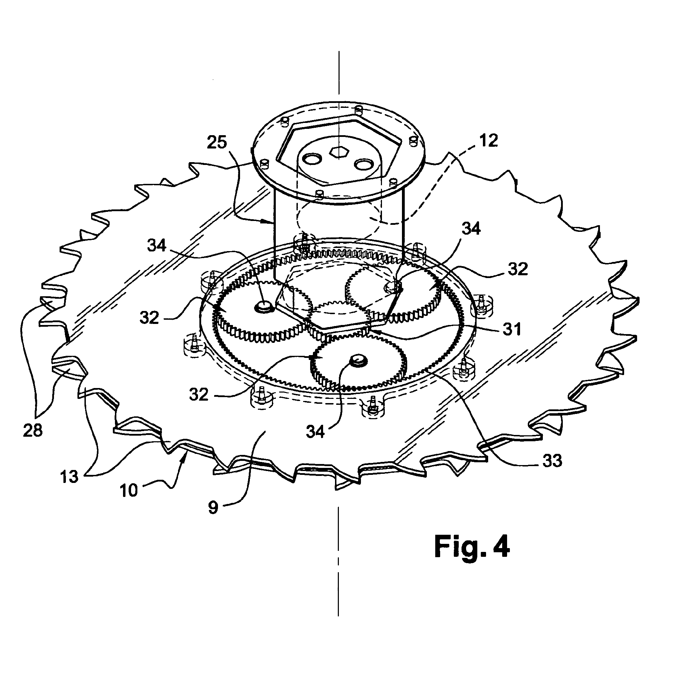

D'autre part, comme indiqué précédemment, chaque disque supérieur 9 est associé à un disque inférieur 10, pris en sandwich entre ledit disque supérieur 9 et le plateau inférieur 7 du châssis 2.
Ces disques inférieurs 10 ont un diamètre identique à celui des disques supérieurs 9. Ils sont également équipés de dents périphériques 28 destinées à servir de contre-couteaux aux dents 13 des disques supérieurs 9.
Pour optimiser la découpe, les disques inférieurs 10 sont entraînés en rotation en sens contraire du disque supérieur associé 9, conformément aux flèches d'orientation 29 et 30, et cela de préférence à une vitesse inférieure à celle dudit disque supérieur 9.
Cet entraînement en rotation des disques inférieurs 10 est réalisé par une extension de l'arbre de sortie de la motorisation 12. Comme on peut le voir sur la figure 4, cette extension est équipée d'un pignon central 31 qui engrène des satellites 32 en prise avec une couronne dentée 33 montée sur le disque inférieur correspondant 10.
Les satellites 32 en question sont montés rotatifs autour d'axes fixes 34 équipant la face supérieure du plateau inférieur 7.

De la sorte, chaque motorisation 12 entraîne les couples de disques 9 et 10 dans des sens contraires et avec un rapport de réduction, ici de l'ordre de 4 (le disque inférieur 10 tournant moins vite que le disque supérieur 9).

Les deux disques 9 et 10 de chaque organe de découpe 3, 3' sont en contact plan entre eux, avec un léger jeu. D'autre part, la face inférieure du disque inférieur 10 est équipée de patins de glissement (non représentés), formant entretoise, destinés à venir en contact contre la face supérieure du plateau inférieur 7.

Les dents 13 et 28 des disques 9 et 10 ont une forme et une structure adaptées pour optimiser la découpe des végétaux. Ces dents 13 et 28 ont une forme générale quart-circulaire, avec une bordure de coupe aiguisée qui s'étend de manière pratiquement radiale, orientée dans le sens d'avancement du disque 9, 10 associé.
La coupe des végétaux est réalisée par les dents 13 du disque supérieur 9, en association avec les dents 28 du disque inférieur 10 qui jouent le rôle de contre-couteaux.

Les différentes dents 13 et 28 sont agencées sur leur disque porteur 9, 10 de manière à ce qu'elles ne travaillent pas toutes en couples au même moment, pour assurer une répartition des efforts de coupe.

Sur les figures 1 et 2, on remarque encore la présence d'une lame de coupe 27 montée en débordement sur la bordure supérieure de chaque virole 16, adaptée pour coopérer avec l'une des bordures du plateau supérieur 8 afin d'assurer la découpe des longs végétaux type ronces ou similaires.

Le dispositif hacheur 4 est monté juste derrière les organes de découpe 3, 3' sur le plateau inférieur 7 de manière adaptée pour assurer une reprise optimale des végétaux découpés.

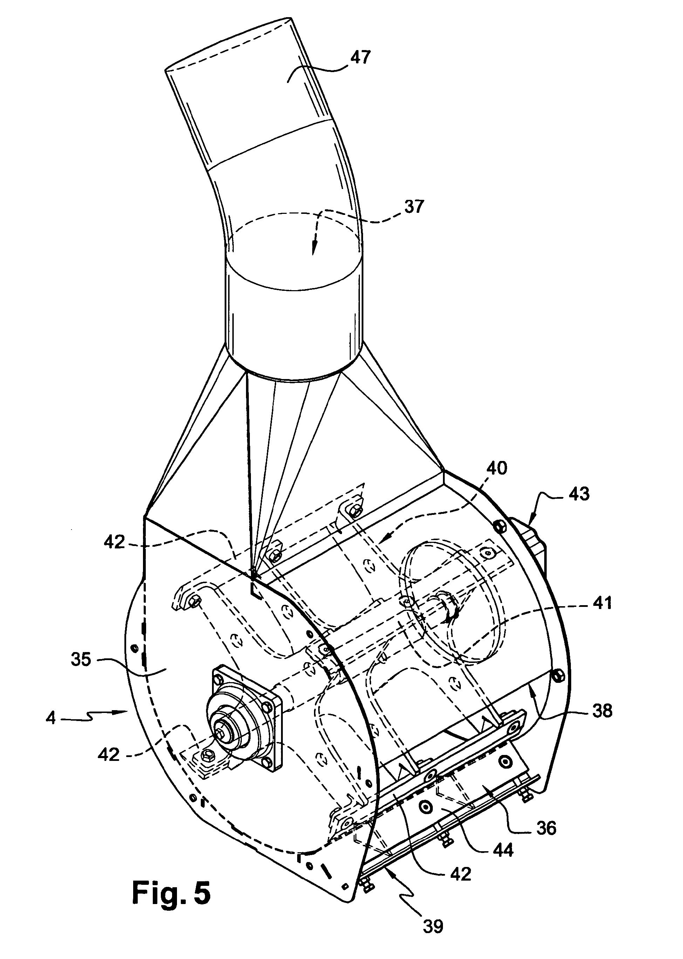

Ce dispositif hacheur 4, détaillé figure 5, est constitué d'un carter 35 de forme générale cylindrique, muni d'une entrée 36 orientée vers le canal de transit 20, et d'une sortie supérieure 37. L'entrée 36 est délimitée par une bordure supérieure 38 et par une bordure inférieure 39 parallèles entre elles. La bordure inférieure 39 s'étend pratiquement au niveau de la face supérieure du plateau inférieur 7 du châssis 2. La sortie 37 présente une forme générale circulaire.
A l'intérieur, le carter 35 intègre un rotor hacheur 40 constitué d'un arbre central horizontal 41, prolongé par des structures de bras radiaux équipés d'une lame de broyage d'extrémité 42. L'arbre central 41 est entraîné en rotation par une motorisation hydraulique 43.
Les lames de broyage 42, ici au nombre de quatre, coopèrent avec un contre-couteau fixe 44 qui équipe la bordure inférieure 39 de l'entrée du carter 35. La position de ce contre-couteau 44 est réglable, en particulier pour permettre un rattrapage d'usure. De manière avantageuse, les lames 42 attaquent le contre-couteau 44 avec un léger biais, pour optimiser la découpe.

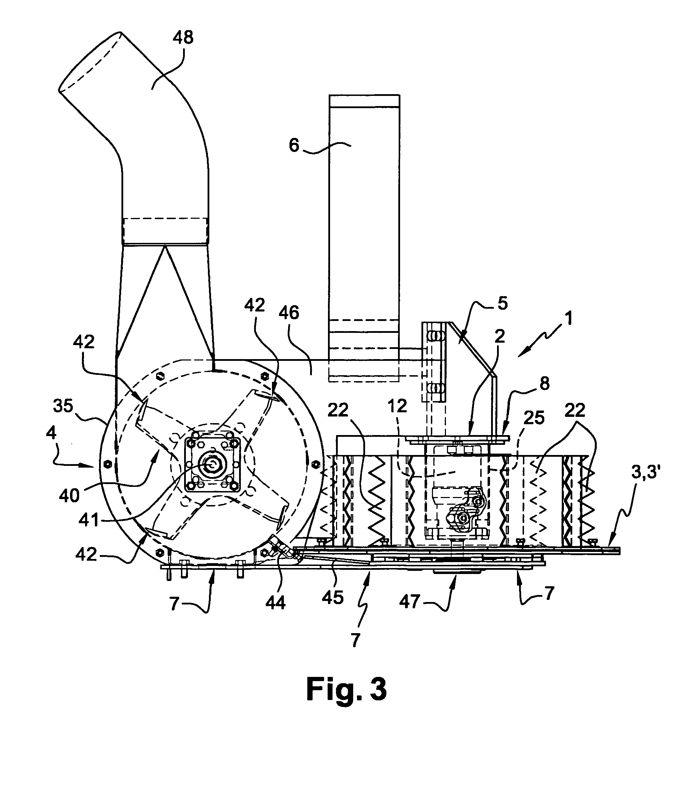

Sur la figure 3, on remarque que la face supérieure du plateau inférieur 7 est équipée d'une rampe 45 qui s'étend sensiblement jusqu'à la bordure inférieure 39 de l'entrée 36 du carter de hacheur 35, optimisant l'orientation des végétaux découpés vers le dispositif broyeur 4.

D'autre part, sur les figures 1 à 3 on remarque que les deux plateaux 7 et 8 sont reliés rigidement par l'intermédiaire du broyeur 4 (fixé sur le plateau inférieur 7) et d'une structure mécano-soudée 46 (interposée entre le broyeur 4 et le plateau supérieur 8). Sur la figure 3, on remarque encore la présence d'un système 47 de type vis/rondelle fixé à l'extrémité de l'arbre des motorisations 12, après que celui-ci ait traversé le plateau inférieur 7, de manière à compléter la liaison entre les deux plateaux 7 et 8 du châssis 2.

L'orifice de sortie 37 du carter de hacheur 35 se prolonge par une canalisation souple 48 destinée à guider les végétaux broyés jusqu'à la remorque ou trémie de stockage qui équipe le véhicule porteur.

Les moteurs hydrauliques 12 et 43 sont connectés au circuit hydraulique du véhicule porteur ; les deux motorisations 12 sont connectées en série.

En fonctionnement, les disques supérieurs 9 des organes de découpe 3, 3' sont entraînés à une vitesse relativement réduite, de l'ordre de 100 à 150 tours/minute. Etant donné le rapport de réduction appliqué, les disques inférieurs associés 10 sont entraînés en sens inverse, de leur côté, à une vitesse comprise entre 10 et 50 tours/minute. Ces vitesses de rotation relativement faibles limitent de manière sensible les risques de projections aux alentours, soit des végétaux découpés, soit des pièces structurelles suite à un bris ou une casse.

Malgré ces vitesses de mise en oeuvre réduites, la coupe des végétaux est franche et de bonne qualité, du fait de la structure des disques de découpe 9, 10, avec leurs dents périphériques 13, 28.
Après la découpe, les végétaux sont orientés vers le dispositif hacheur 4 et aspirés par ce dernier du fait de la vitesse de rotation élevée du rotor 40, aux alentours de 2000-3000 tours/minute.
Après le broyage, et toujours du fait de la rotation rapide du rotor 40, les végétaux broyés sont éjectés par l'orifice de sortie 37 et transférés dans la trémie ou la remorque de réception, sans nécessiter d'autres moyens de transfert. En plus de sa fonction de broyage, le rotor 40 joue le rôle d'un ventilateur d'aspiration et d'éjection

On obtient un dispositif de découpe de structure relativement simple, très sûr et efficace, qui met en oeuvre successivement des opérations de découpe, de broyage et de reprise des végétaux.

## Revendications

1. Dispositif de découpe de végétaux, destiné à équiper un bras de manipulation spatiale, en particulier pour la taille de haies ou l'entretien d'accotements, lequel dispositif comprend un châssis (2) supportant au moins un organe (3, 3') de découpe desdits végétaux, et un dispositif hacheur (4) comportant un rotor de hachage (40), **caractérisé en ce que** ledit rotor de hachage (40) est intégré dans un carter (35) qui est muni d'une entrée (36) et d'une sortie (37), et **en ce que** ledit ou lesdits organes de découpe (3, 3') sont disposés à l'extérieur dudit carter de rotor (35), ledit ou lesdits organes de découpe (3, 3') étant constitué(s) d'un disque de découpe supérieur (9), muni de dents périphériques (13), associé à un disque inférieur (10) également muni de dents périphériques (28), faisant office de contre-couteaux, lequel dispositif hacheur (4) est juxtaposé au(x)dit(s) organe(s) de découpe (3, 3'), agencé pour assurer la reprise par ladite entrée de carter (36) desdits végétaux découpés, le broyage de ces végétaux par ledit rotor (40), puis l'éjection desdits végétaux broyés par ladite sortie de carter (37), ledit rotor (40) faisant alors office de ventilateur d'éjection.

2. Dispositif de découpe selon la revendication 1, **caractérisé en ce qu'**il comporte deux organes de découpe juxtaposés (3, 3'), situés dans le même plan de coupe, et dont les disques de découpe supérieurs (9) tournent en sens inverse l'un de l'autre, l'espace situé au-dessus dudit plan de coupe et entre les axes desdits organes de découpe (3, 3') constituant un canal (20) de transit des végétaux découpés, l'entrée (36) du dispositif hacheur (4) étant disposée dans le prolongement immédiat dudit canal (20).

3. Dispositif de découpe selon l'une quelconque des revendications 1 ou 2, **caractérisé en ce que** le disque inférieur (10) du ou des organes de découpe (3, 3') est entraîné en sens inverse par rapport au disque supérieur (9) associé.

4. Dispositif de découpe selon la revendication 3, **caractérisé en ce que** le disque inférieur (10) est entraîné en rotation à une vitesse inférieure à celle du disque supérieur (9).

5. Dispositif de découpe selon l'une quelconque des revendications 3 ou 4, **caractérisé en ce que** pour chaque organe de découpe (3, 3'), le disque inférieur (10) est entraîné par la motorisation (12) du disque supérieur (9), au moyen d'un système adapté d'engrenage par pignons (31, 32, 33).

6. Dispositif de découpe selon l'une quelconque des revendications 4 ou 5, **caractérisé en ce que** le disque supérieur (9) de chaque organe de découpe (3, 3') est entraîné à une vitesse comprise entre 100 et 150 tours par minute, le disque inférieur (10) étant lui-même entraîné à une vitesse comprise entre 10 et 50 tours par minute.

7. Dispositif de découpe selon l'une quelconque des revendications 1 à 6, **caractérisé en ce que** le disque supérieur (9) de chaque organe de découpe (3, 3') se prolonge par une virole coaxiale (16) adaptée pour canaliser les végétaux découpés,

8. Dispositif de découpe selon la revendication 7, **caractérisé en ce que** la virole de canalisation (16) du disque supérieur (9) de chaque organe de découpe (3, 3'), comporte des organes (22) d'entraînement des végétaux découpés, en forme de dents périphériques.

9. Dispositif de découpe selon l'une quelconque des revendications 1 à 8, **caractérisé en ce qu'**il comporte deux organes de découpe juxtaposés (3, 3'), situés dans le même plan, dont les disques supérieurs (9) se prolongent chacun par une virole de canalisation (16) au sein de laquelle est intégré un moteur hydraulique (12) servant à l'entraînement en rotation de l'organe de découpe (3, 3') associé, lesdites viroles (18) définissant les côtés du canal de transit (20) des végétaux, ledit canal (20) étant également délimité par une structure supérieure fixe (8) s'étendant juste au-dessus desdites viroles (16), et par une structure inférieure fixe (7) s'étendant juste au-dessous desdits organes de découpe (3, 3'), lesquelles structures supérieure (8) et inférieure (7) font partie intégrante du châssis (2) du dispositif, et laquelle structure inférieure (7) se prolonge jusqu'à la partie inférieure de l'entrée (36) du dispositif hacheur (4).

10. Dispositif de découpe selon l'une quelconque des revendications 1 à 9, **caractérisé en ce qu'**il comporte un dispositif hacheur (4) constitué d'un carter (35) de forme générale cylindrique muni - d'une entrée (36) délimitée par une bordure supérieure (38) et par une bordure inférieure (39), et - d'un orifice de sortie (37), lequel carter (35) intègre un rotor de hachage (40) qui est entraîné par une motorisation hydraulique (43), et dont les couteaux (42) coopèrent avec un organe (44) équipant ladite bordure inférieure (39) de l'entrée (36) du carter (35), faisant office de contre-couteau, lequel rotor (40) assure l'aspiration des végétaux découpés, leur broyage et l'éjection des végétaux broyés par l'orifice de sortie (37).

11. Dispositif de découpe selon la revendication 10, **caractérisé en ce que** le dispositif hacheur (4) est adapté pour assurer l'éjection des végétaux broyés vers une trémie de récupération, ceci par l'intermédiaire d'une canalisation souple (48), et sous l'effet « ventilateur » procuré par le rotor de hachage (40).

## Claims

1. A vegetation cutter, intended to be mounted on a spatial handling arm, in particular for hedge trimming or road shoulder maintenance, said cutter comprises a chassis (2) supporting at least one element (3, 3') for cutting said vegetation, and a chopper (4) comprising a chopping rotor (40), **characterized in that** said chopping rotor (40) is integrated in a casing (35) having an inlet (36) and an outlet (37), and **in that** said cutting element(s) (3, 3') are arranged outside said rotor casing (35), said cutting element(s) (3, 3') being formed of an upper cutting disc (9) provided with peripheral teeth (13), associated with a lower disc (10) also provided with peripheral teeth (28), acting as counter-blades, said chopper (4) is juxtaposed to the cutting element(s) (3, 3'), arranged so as to ensure the collection of said cut vegetation through said casing inlet (36), the crushing of this vegetation by said rotor (40), and the ejection of said crushed vegetation through said casing outlet (37), said rotor (40) then acting as an ejection fan.

2. A cutter according to claim 1, **characterized in that** it comprises two juxtaposed cutting elements (3, 3'), located in the same cutting plane, and the upper cutting discs (9) thereof rotate in opposite directions with respect to each other, the space located above said cutting plane and between the axes of said cutting elements (3, 3') forming a channel (20) for the transit of the cut vegetation, the inlet (36) of the chopper (4) being placed in the immediate continuation of said channel (20).

3. A cutter according to any one of claims 1 or 2, **characterized in that** the lower disc (10) of the cutting element(s) (3, 3') is driven in the opposite direction with respect to the associated upper disc (9).

4. A cutter according to claim 3, **characterized in that** the lower disc (10) is driven in rotation at a speed lower than that of the upper disc (9).

5. A cutter according to any one of claims 3 or 4, **characterized in that**, for each cutting element (3, 3'), the lower disc (10) is driven by the motor (12) of the upper disc (9), by means of an adapted pinion-gear system (31, 32, 33).

6. A cutter according to any one of claims 4 or 5, **characterized in that** the upper disc (9) of each cutting element (3, 3') is driven at a speed comprised between 100 and 150 rotations per minute, the lower disc (10) being itself driven at a speed comprised between 10 and 50 rotations per minute.

7. A cutter according to any one of claims 1 to 6, **characterized in that** the upper disc (9) of each cutting element (3, 3') is extended by a coaxial ring (16) adapted to guide the cut vegetation.

8. A cutter according to claim 7, **characterized in that** the guiding ring (16) of the upper disc (9) of each cutting element (3, 3') comprises peripheral-teeth-shaped elements (22) for carrying along the cut vegetation.

9. A cutter according to any one of claims 1 to 8, **characterized in that** it comprises two juxtaposed cutting elements (3, 3'), located in the same plane, the upper discs (9) of which are each extended by a guiding ring (16) inside which is integrated an hydraulic motor (12) serving for driving the associated cut element (3, 3') in rotation, said ring (16) defining the sides of the vegetation transit channel (20), said channel (20) being also delimited by a fixed upper structure (8) extending just above said rings (16), and by a fixed lower structure (7) extending just below said cutting rings (3, 3'), said upper (8) and lower (7) structures are integral parts of the chassis (2) of the device, and said lower structure (7) is extended up to the lower portion of the inlet (36) of the chopper (4).

10. A cutter according to any one of claims 1 to 9, **characterized in that** it comprises a chopper (4) formed of a generally cylindrical casing (35) provided with - an inlet (36) delimited by an upper edge (38) and a lower edge (39), and - an outlet (37), said casing (35) integrates a chopping rotor (40) that is driven by an hydraulic motor (43), and the blades (42) of which cooperate with an element (44) provided on said lower edge (39) of the inlet (36) of the casing (35), and acting as a counter-blade, said rotor (40) ensures the sucking-up of the cut vegetation, the crushing thereof and the ejection of the crushed vegetation through the outlet (37).

11. A cutter according to claim 10, **characterized in that** the chopper (4) is adapted to ensure the ejection of the crushed vegetation toward a collecting hopper, via a flexible duct (48), and under the "fan" effect provided by the chopping rotor (40).

## Patentansprüche

1. Vegetationsmähvorrichtung, die dazu gedacht ist, einen räumlichen Manipulationsarm auszustatten, insbesondere zum Schneiden von Hecken oder zur Pflege von Straßenrandstreifen, wobei die Vorrichtung ein Chassis (2), das mindestens ein Organ (3, 3') zum Mähen der Vegetation trägt, und eine Häckselvorrichtung (4), die einen Häckselrotor (40) aufweist, umfasst, **dadurch gekennzeichnet, dass** der Häckselrotor (40) in ein Gehäuse (35) eingebaut ist, das mit einem Eingang (36) und einem Ausgang (37) versehen ist, und dass das oder die Mähorgan(e) (3, 3') außerhalb des Rotorgehäuses (35) angeordnet ist bzw. sind, wobei das oder die Mähorgan(e) (3, 3') aus einer oberen Mähscheibe (9), die mit Umfangszähnen (13) versehen und mit einer unteren Scheibe (10) verbunden ist, die ebenfalls mit Umfangszähnen (28) versehen ist, die als Gegenmesser dienen, besteht bzw. bestehen, wobei die Häckselvorrichtung (4) neben dem oder den Mähorgan(en) (3, 3') liegt und angeordnet ist, um die Übernahme der gemähten Vegetation durch den Eingang des Gehäuses (36), das Zerkleinern dieser Vegetation durch den Rotor (40), dann den Auswurf der zerkleinerten Vegetation durch den Ausgang des Gehäuses (37) sicherzustellen, wobei der Rotor (40) dann als Auswurfventilator dient.

2. Mähvorrichtung nach Anspruch 1, **dadurch gekennzeichnet, dass** sie zwei nebeneinander liegende Mähorgane (3, 3') umfasst, die in derselben Schneidebene liegen und deren obere Mähscheiben (9) sich zueinander gegenläufig drehen, wobei der Raum, der oberhalb der Schneidebene und zwischen den Achsen der Mähorgane (3, 3') liegt, einen Übergangskanal (20) der gemähten Vegetation bildet, wobei der Eingang (36) der Häckselvorrichtung (4) in der direkten Verlängerung des Kanals (20) angeordnet ist.

3. Mähvorrichtung nach einem der Ansprüche 1 oder 2, **dadurch gekennzeichnet, dass** die untere Scheibe (10) des oder der Mähorgane (3, 3') in umgekehrter Richtung zu der dazugehörigen oberen Scheibe (9) angetrieben wird.

4. Mähvorrichtung nach Anspruch 3, **dadurch gekennzeichnet, dass** die untere Scheibe (10) auf einer langsameren Geschwindigkeit gedreht wird als die obere Scheibe (9).

5. Mähvorrichtung nach einem der Ansprüche 3 oder 4, **dadurch gekennzeichnet, dass** für jedes Mähorgan (3, 3') die untere Scheibe (10) durch die Motorisierung (12) der oberen Scheibe (9) mittels eines geeigneten Räderwerks (31, 32, 33) angetrieben wird.

6. Mähvorrichtung nach einem der Ansprüche 4 oder 5, **dadurch gekennzeichnet, dass** die obere Scheibe (9) jedes Mähorgans (3, 3') auf einer Geschwindigkeit angetrieben wird, die zwischen 100 und 150 Umdrehungen pro Minute liegt, wobei die untere Scheibe (10) wiederum auf einer Geschwindigkeit zwischen 10 und 50 Umdrehungen pro Minute angetrieben wird.

7. Mähvorrichtung nach einem der Ansprüche 1 bis 6, **dadurch gekennzeichnet, dass** die obere Scheibe (9) jedes Mähorgans (3, 3') sich um einen koaxialen Ring (16) verlängert, der dazu geeignet ist, die gemähte Vegetation zu kanalisieren.

8. Mähvorrichtung nach Anspruch 7, **dadurch gekennzeichnet, dass** der Kanalisierungsring (16) der oberen Scheibe (9) jedes Mähorgans (3, 3') Organe (22) zum Mitnehmen der gemähten Vegetation in Form von Umfangszähnen umfasst.

9. Mähvorrichtung nach einem der Ansprüche 1 bis 8, **dadurch gekennzeichnet, dass** sie zwei nebeneinander liegende Mähorgane (3, 3') umfasst, die in derselben Ebene liegen, deren obere Scheiben (9) sich jeweils um einen Kanalisierungsring (16) verlängern, in dem ein Hydraulikmotor (12) eingebaut ist, der zum Drehen des dazugehörigen Mähorgans (3, 3') dient, wobei die Ringe (16) die Seiten des Übergangskanals (20) der Vegetation definieren, wobei der Kanal (20) auch von einer ortsfesten oberen Struktur (8), die sich genau oberhalb der Ringe (16) erstreckt, und von einer ortsfesten unteren Struktur (7), die sich genau unterhalb der Mähorgane (3, 3') erstreckt, begrenzt wird, wobei die obere (8) und untere (7) Struktur Bestandteil des Chassis (2) der Vorrichtung sind, und wobei die untere Struktur (7) sich bis zum unteren Teil des Eingangs (36) der Häckselvorrichtung (4) verlängert.

10. Mähvorrichtung nach einem der Ansprüche 1 bis 9, **dadurch gekennzeichnet, dass** sie eine Häckselvorrichtung (4) umfasst, die aus einem Gehäuse (35) mit allgemein zylindrischer Form besteht, das mit einem Eingang (36), der von einer oberen Einfassung (38) und von einer unteren Einfassung (39) begrenzt wird, und mit einer Ausgangsöffnung (37) versehen ist, wobei das Gehäuse (35) einen Häckselrotor (40) integriert, der von einer Hydraulikmotorisierung (43) angetrieben wird und dessen Messer (42) mit einem Organ (44) zusammenwirken, das die untere Einfassung (39) des Eingangs (36) des Gehäuses (35) ausstattet, das als Gegenmesser dient, wobei der Rotor (40) das Ansaugen der gemähten Vegetation, ihre Zerkleinerung und den Auswurf der zerkleinerten Vegetation durch die Ausgangsöffnung (37) sicherstellt.

11. Mähvorrichtung nach Anspruch 10, **dadurch gekennzeichnet, dass** die Häckselvorrichtung (4) dazu geeignet ist, um den Auswurf der zerkleinerten Vegetation in einen Auffangtrichter sicherzustellen, und zwar über eine flexible Leitung (48) und unter dem "Ventilator-" Effekt, den der Häckselrotor (40) verleiht.
